# EUROPEAN PATENT SPECIFICATION

(11) **EP 2 476 612 B1**
(45) Date of publication and mention of the grant of the patent: **18.01.2017**
(21) Application number: 11195896.3
(22) Date of filing: 28.12.2011
(51) Int. Cl.: B63C 5/00, E01B 23/10

(54) **Movable rail apparatus for transferring ships and method of transferring ships using the same**
Bewegliche Schienenvorrichtung zur Überführung von Schiffen und Verfahren zur Überführung von Schiffen damit
Appareil de rail mobile pour navires de transfert et procédé de transfert de navires l'utilisant

(30) Priority: 12.01.2011 KR 20110003267
(43) Date of publication of application: 18.07.2012
(73) Proprietor: RA IN HO Co., Ltd., Suncheon-si, Jellanam-do 540-856 (KR)
(72) Inventor: Sinnreich, Rainer, 545-885 Jeollanam-do (KR)
(74) Representative: Maser, Jochen

(56) References cited:
- WO-A1-2007/124944
- DE-B1- 2 749 952
- GB-A- 2 130 987
- KR-B1- 100 939 899

## Description

### BACKGROUND OF THE INVENTION

### 1. Field of the Invention

The present invention relates generally to movable rail apparatuses for transferring ships and methods of transferring ships using the apparatuses and, more particularly, to a movable rail apparatus for transferring ships which is configured such that a rail is alternately moved in a transferring direction and set on the ground, and a heavy weight such as a ship, a block or the like can be smoothly transferred along the rail, thus enhancing the work efficiency, and helping to maximize the efficiency of producing ships, and a method of transferring ships using the apparatus.

### 2. Description of the Related Art

Generally, apparatuses (transporters) for transferring ships are used in shipyards or the like to transfer different kinds of heavy weights, such as constructed ships, blocks, etc., to preset locations.

Such a ship transferring apparatus requires a rail which is arranged on the ground to allow the apparatus to transfer a heavy weight, such as the constructed ship, block or the like, along the rail to a preset location. However, this has problems of low usage efficiency and a limited application range because the ship transferring apparatus is unavailable without the rail.

Furthermore, if a shipyard site with a limited area gets an increase in shipbuilding orders, it runs short of space in which to install the rails. Also, constructing additional rails takes time. Unless the rail construction rate catches up with the ship building rate, it will reduce the efficiency of producing ships.

Therefore, as a proposal to overcome the above problems, the inventor of the present invention invented a "Method and apparatus for constructing movable rail" which is disclosed in Korean Patent KR10-0939899 B1.

In the technology of "Method and apparatus for constructing movable rail", a plurality of rails are removably arranged on the ground to allow a ship transferring apparatus to move along the rails. However, it is quite cumbersome to arrange the rails and remove them. In addition, the ship transferring apparatus cannot be used until the rail is completely arranged on the ground, thus lengthening the overall work time and the time it takes to transfer the ship.

### SUMMARY OF THE INVENTION

Accordingly, the present invention has been made keeping in mind the above problems occurring in the prior art, and an object of the present invention is to provide a movable rail apparatus for transferring ships which is configured such that a rail is alternately moved and set on the ground, and a heavy weight such as a ship, can be smoothly transferred along the rail, thus increasing the efficiency of constructing the ship and markedly reducing the time it takes to transfer the ship.

In order to accomplish the above object, in an aspect, the present invention provides a movable rail apparatus for transferring a ship, according to claim 1. It includes a main body supporting the ship placed thereon; a front axle provided under a front portion of the main body, the front axle being provided with wheels which are steerable and liftable ; a rear axle provided under a rear portion of the main body, the rear axle being provided with a wheel which is liftable; support bars; side actuators provided at opposite sides under the main body, the side actuators moving the corresponding support bars upwards or downwards; a support body having a wheel provided under a lower surface thereof, with a lift actuator provided on an upper surface of the support body, the lift actuator being connected to a predetermined portion of a lower surface of the main body; a rail configured such that the rail is moved upwards or downwards by upward or downward operation of the lift actuator, the rail being movable forwards or backwards while the wheel of the support body is put into contact with an upper surface of the rail; and a drive unit provided at a predetermined position under the main body, the drive unit moving the rail forwards or backwards.

The movable rail apparatus may further include support blocks provided at

The movable rail apparatus may further include support blocks provided at opposite sides under the main body, the support blocks coming into contact with upper surfaces of the corresponding support bars and supporting the main body on the support bars.

The movable rail apparatus may further include auxiliary rails provided on opposite sides of the rail; guide rollers provided on opposite sides of the support body, the guide rollers engaging with the corresponding auxiliary rails; and auxiliary actuators provided at opposite sides under the main body, the auxiliary actuators moving the support body upwards or downwards.

The drive unit may include: a drum rotatably provided at a predetermined position under the main body; a drive motor rotating the drum; and a wire rope connected to front and rear ends of the rail, the wire rope being wound around a circumference of the drum.

In another aspect, the present invention provides a method of transferring a ship according to claim 5. It includes operating side actuators and a lift actuator so that support bars and a rail are lifted, and operating a front axle and a rear axle so that the apparatus moves to a preset location; operating the side actuators at the preset location so that the support bars are placed onto a ground; lifting wheels of the front and rear axles; operating a drive unit so that the rail is moved forwards; operating the lift actuator so that the rail is placed onto the ground; operating the side actuator so that the support bars are lifted from the ground; operating the drive unit so that a main body and a support body are moved forwards; and operating the side actuators so that the support bars are moved downwards and placed onto the ground.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a front view illustrating the construction of a movable rail apparatus for transferring ships, according to the present invention; apparatus for transferring ships according to the present invention;
FIG. 3 is a side view illustrating the construction of the movable rail apparatus for transferring ships according to the present invention; and
FIGS. 4 through 17 are views successively showing a method of transferring a ship using the movable rail apparatus, according to the present invention.

### DESCRIPTION OF THE PREFERRED EMBODIMENTS

Hereinafter, a preferred embodiment of the present invention will be described in detail with reference to the attached drawings.

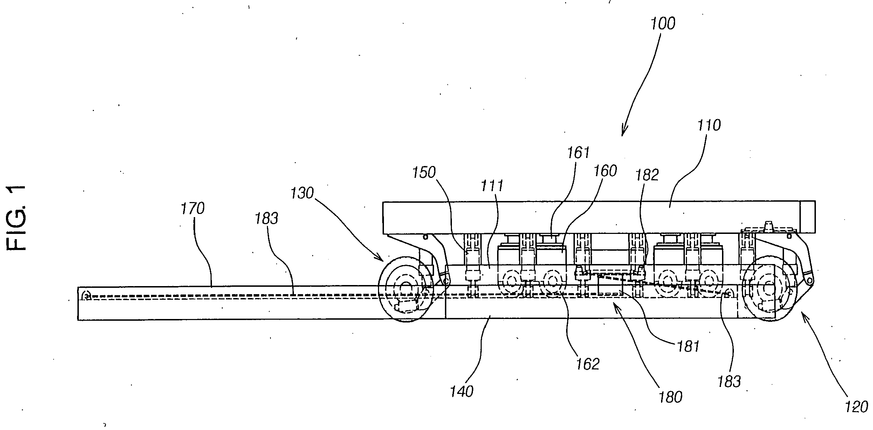

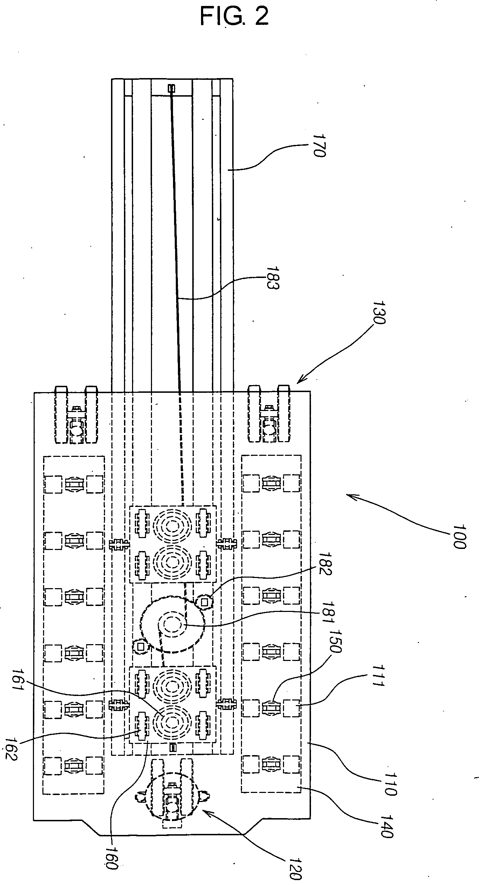

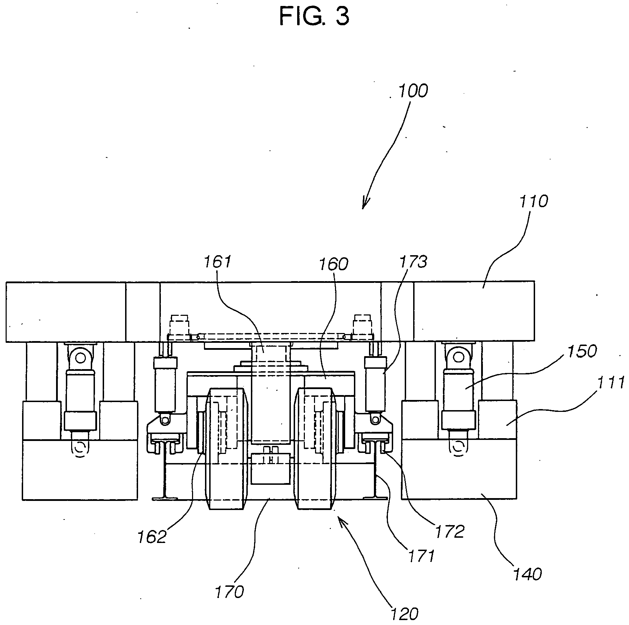

FIG. 1 is a front view illustrating the construction of a movable rail apparatus for transferring ships, according to the present invention. FIG. 2 is a plan view illustrating the construction of the movable rail apparatus for transferring ships according to the present invention. FIG. 3 is a side view illustrating the construction of the movable rail apparatus for transferring ships according to the present invention.

The movable rail apparatus for transferring ships according to the present invention includes a main body 110, a front axle 120, rear axles 130, support bars 140, side actuators 150, a support body 160, a rail 170 and a drive unit 180. The main body 110 supports a heavy weight such as a ship. The front axle 120 is provided under a front portion of the main body 110 and provided with wheels which are steerable and liftable. The rear axles 130 are provided under a rear portion of the main body 110. Each rear axle is provided with wheels and configured such that the wheels are liftable. The side actuators 150 are provided on opposite sides under the main body 110 and move the corresponding support bars 140 vertically. Wheels 162 are provided under the support body 160. A lift actuator 161 is connected to a predetermined portion of the lower surface of the main body 110 and is located on the support body 160. The rail 170 is configured such that it is moved vertically by upward or downward operation of the lift actuator 161. The rail 170 can move forwards or backwards while maintaining contact between the wheels 162 and the upper surface of the rail 170. The drive unit 180 is provided at a predetermined position under the main body 110 and moves the rail 170 forwards or backwards.

The main body 110 is configured to be able to support a ship thereon and move it reliably.

Preferably, a separate support plate or pad or the like may be provided on the upper surface of the main body 110 to prevent the main body 110 from being damaged by frictional force or impact which may applied to the main body 110 when the ship is loaded thereonto. Further, a power pack (not shown) is provided at a predetermined position under the main body 110. The power pack provides drive force to the front axle 120 or the rear axles 130, the side actuators 150, the lift actuator 161, etc.

Support blocks 111 may be provided at opposite sides under the main body 110. The support blocks 111 comes into contact with the upper surfaces of the corresponding support bars 140 and support the main body 110 on the support bars 140.

Meanwhile, the front axle 120 and the rear axles 130 function not only to control the direction of movement of the main body 110 but also to provide the force that moves the main body 110.

Particularly, the operational principle and structure of the front axle 120 and the rear axles 130 according to the present invention were disclosed in Korean Patent KR 10-0850807 B1 and KR 10-0784781 B1 which were issued to the applicant of the present invention, therefore their detailed explanation will be omitted.

As shown in FIG. 3, while the support bars 140 are placed on the ground, if the side actuators 150 are operated so that the main body 110 moves upwards, the rail 170 is lifted away from the ground. The rail 170 is thus allowed to smoothly move forwards or backwards.

The side actuators 150 also function to move the support bars 140 upwards or downwards.

In the present invention, the side actuators 150 and the lift actuators 161 comprise hydraulic actuators because they are convenient to maintain and repair and are able to effectively move the heavy weight upwards or downwards.

The wheels 162 of the support body 160 come into contact with the upper surface of the rail 170. In this state, the drive unit 180 can move the rail 170 or the support body 160 forwards or backwards, that is, in the longitudinal direction.

Particularly, the lift actuator 161 functions to move the support body 160 and the rail 170 upwards or downwards in response to the longitudinal movement stage of the rail 170 or the support body 160.

The rail 170 functions to support and guide the main body 110 and the support body 160 so that they can move smoothly forwards.

While the rail 170 is placed on the ground, the drive unit 180 moves the main body 110 and the support body 160 forwards. In contrast while the rail 170 is spaced apart from the ground, the drive unit 180 moves the rail 170 forwards.

Therefore, the main body 110 and the rail 170 alternately move forwards so that the heavy weight of the the ship can be moved forwards.

In the embodiment, auxiliary rails 171 are provided on opposite sides of the rail 170. Guide rollers 172 are provided on opposite sides of the support body 160 and engage with the corresponding auxiliary rails 171. Further, auxiliary actuators 173 are provided at opposite sides under the main body 110 and move the support body 160 upwards or downwards. Here, because the auxiliary rails 171 engage with the guide rollers 172, the rail 170 can be smoothly lifted. In addition, this construction makes it possible to smoothly move the support body 160 forwards or backwards along the rail 170.

Meanwhile, the drive unit 180 generates the drive force with which the main body 110 and the rail 170 alternately move forwards.

The drive unit 180 includes a drum 181 which is rotatably provided at a predetermined position under the main body 110, a drive motor 182 which rotates the drum 181, and a wire rope 183 which is connected to front and rear ends of the rail 170 and wound around the circumference of the drum 181.

The drive motor 182 rotates the drum 181 so that it winds in or releases the wire rope 183, thus moving the main body 110 or the rail 170 in the 181.

The drive motor 182 rotates the drum 181 so that it winds in or releases the wire rope 183, thus moving the main body 110 or the rail 170 in the longitudinal direction.

Of course, the drive unit 180 may comprise one of different kinds of drive means, for example, a rack and pinion.

Hereinafter, the method of transferring a ship using the movable rail apparatus according to the present invention will be explained with reference to the related drawings.

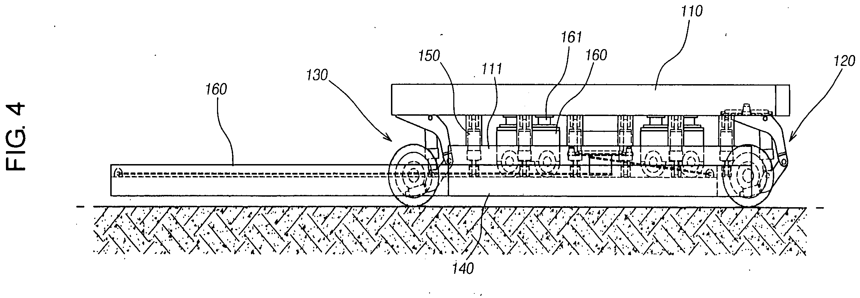

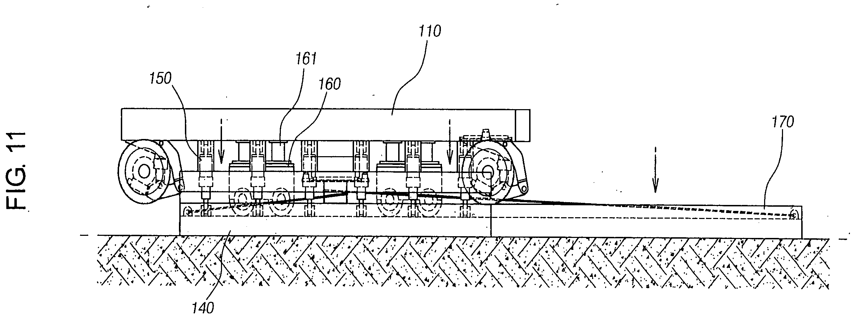

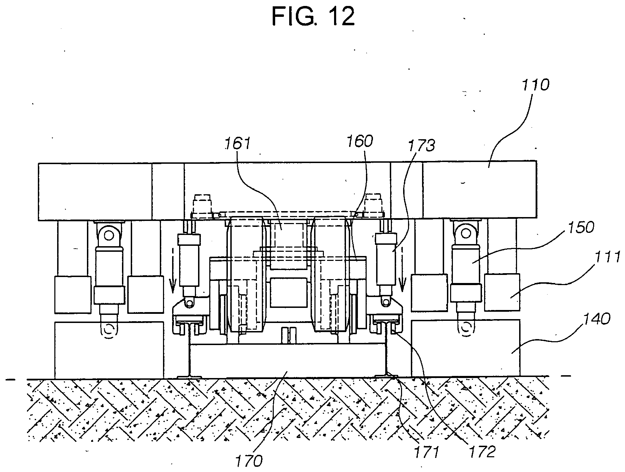

FIGS. 4 through 17 are views successively showing a process of transferring the ship using the movable rail apparatus, according to the present invention.

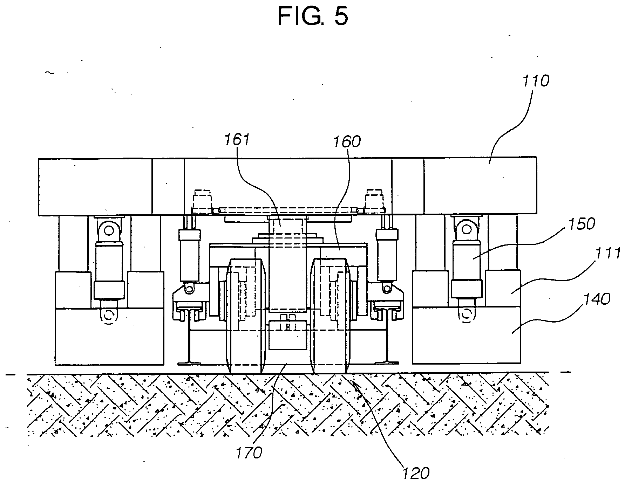

Referring to FIGS. 4 and 5, the side actuators 150 and the lift actuator 161 operate so that the support bar 140 and the rail 170 move upwards. Thereafter, the front axle 120 or the rear axles 130 are operated so that the movable rail apparatus moves to a preset location.

In this operation, the support bar 140 and the rail 170 are lifted away from the ground so that the movable rail apparatus can be smoothly moved by operating the front axle 120 or the rear axles 130 to the preset location without interference.

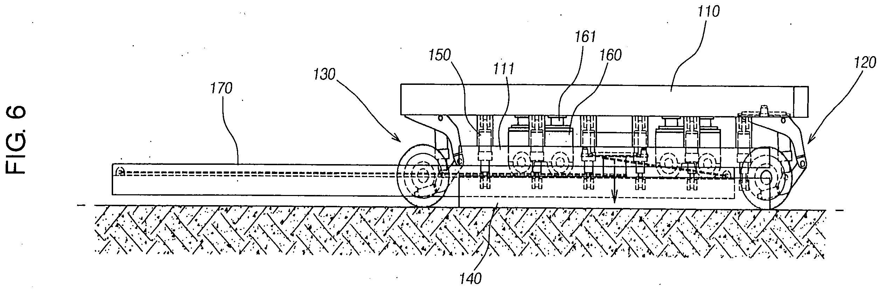

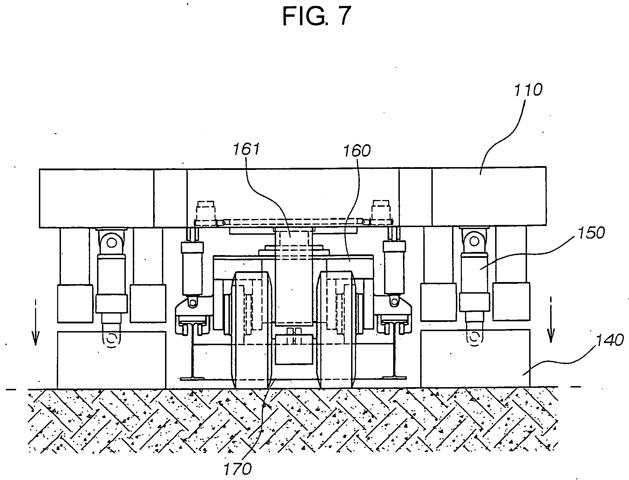

Referring to FIGS. 6 and 7, subsequently, the side actuators 150 operate at the preset location so that the support bars 140 are placed onto the ground.

In this operation, after the movable rail apparatus has stopped at the preset location, the support bars 140 are placed onto the ground, thus supporting the apparatus on the ground.

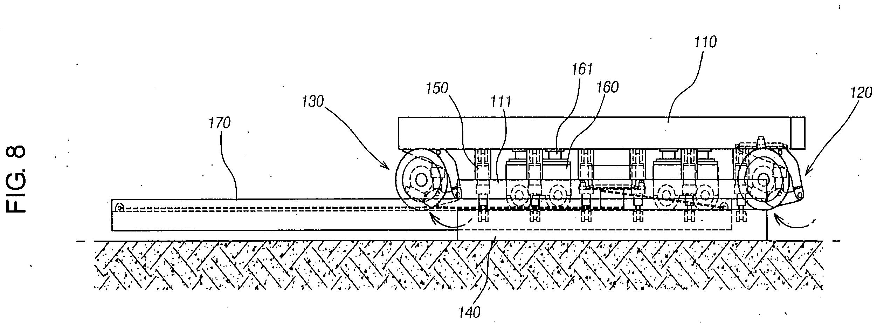

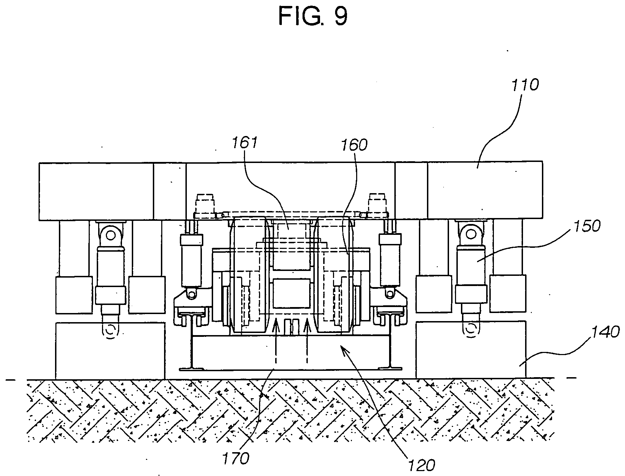

As shown in FIGS. 8 and 9, the wheels of the front axle 120 and the wheels of the rear axle 130 are lifted.

In this operation, the wheels of the front and rear axles 120 and 130 are lifted to prevent them from impeding forward movement of the rail 170.

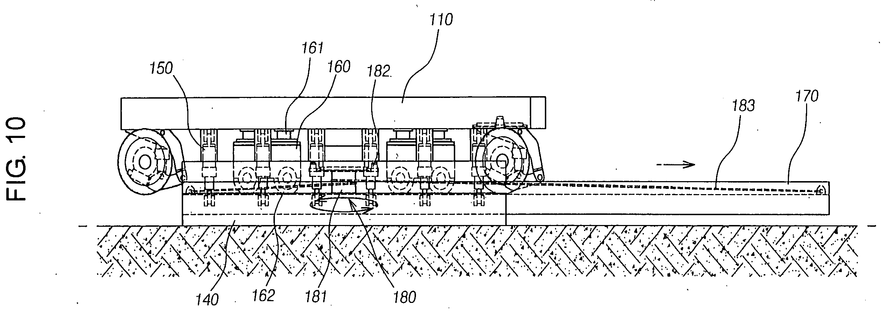

Referring to FIG. 10, the drive unit 180 thereafter operates so that the rail 170 moves forwards.

In this operation, the rail 170 moves forwards so that it can guide the main In this operation, the rail 170 is placed onto the ground, thus making it possible to reliably support the main body 110 and the support body 160 when they move forwards.

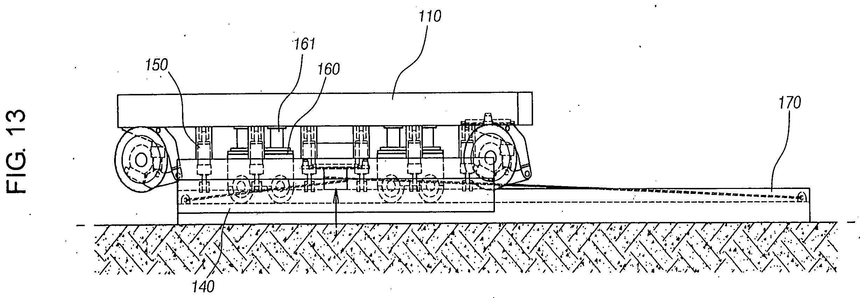

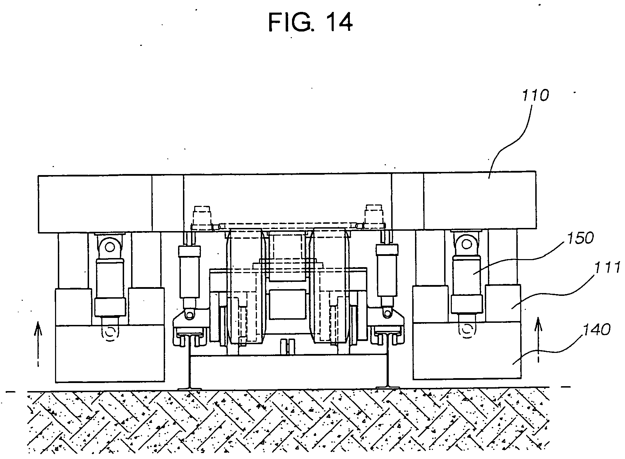

As shown in FIGS. 13 and 14, subsequently, the side actuators 150 operate so that the support bars 140 are lifted.

In this operation, the support bars 140 are lifted from the ground, thus allowing the main body 110 and the support body 160 to move forwards along the rail 170.

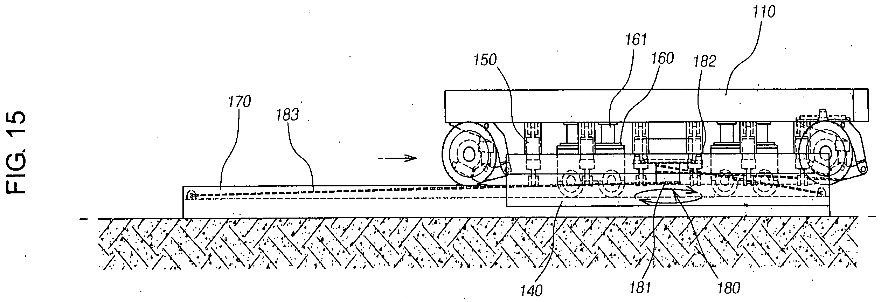

Referring to FIG. 15, the drive unit 180 thereafter operates so that the main body 110 and the support body 160 move forwards.

That is, in this operation, the drive unit 180 moves the main body 110 and the support body 160 forwards along the rail 170 that is supported on the ground.

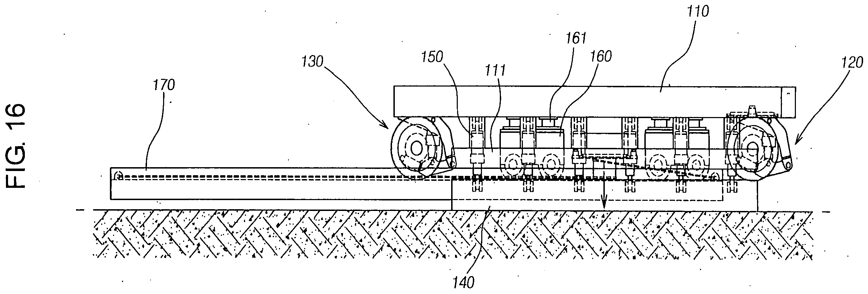

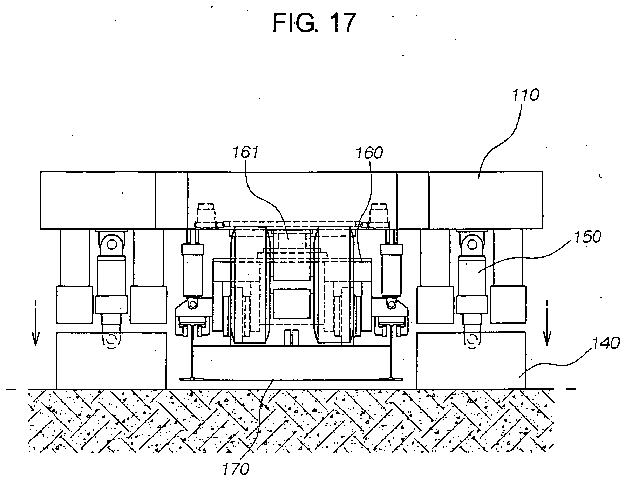

Referring to FIGS. 16 and 17, the side actuators 150 subsequently operate so that the support bars 140 are moved downwards and placed onto the ground again.

As such, in the method of transferring the ship using the movable rail apparatus according to the present invention, after the movable rail apparatus moves to a preset location, it repeats the operation of alternately moving the rail 170 and the main body 110, on which a heavy weight such as the ship is placed. Thereby, the heavy weight can be transferred to a desired location.

As described above, the present invention is configured such that a rail can be alternately moved and set on the ground, and a ship, can be smoothly transferred along the rail. Therefore, the present invention can enhance the efficiency of constructing and transferring the ship.

Moreover, after the movable rail apparatus moves to a preset location, moving the rail and setting it on the ground are repeatedly performed, and the ship can be transferred along the rail. Thus, work efficiency can be improved, and the time it takes to transfer the heavy weight can be markedly reduced.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A movable rail apparatus for transferring a ship, comprising:
a main body (110) supporting the ship placed thereon;
a front axle (120) provided under a front portion of the main body (110), the front axle (120) being provided with wheels which are steerable and adjustable in height;
a rear axle (130) provided under a rear portion of the main body (110), the rear axle (130) being provided with a wheel which can be adjusted in height;
a support body (160) with a lift actuator (161) provided on an upper surface of the support body (160), the lift actuator (161) being connected to a predetermined portion of a lower surface of the main body (110);
a rail (170) configured such that the rail (170) is moved upwards or downwards by upward or downward operation of the lift actuator (161), **characterised in that** the support body (160) has a wheel provided under a lower surface thereof, **in that** the rail (170) is movable forwards or backwards while the wheel (162) of the support body (160) is put into contact with an upper surface of the rail (170); and
further **characterised by** a drive unit (180) provided at a predetermined position under the main body (110), the drive unit (180) moving the rail (170) forwards or backwards,
support bars (140), and
side actuators (150) provided at opposite sides under the main body (110), the side actuators moving the corresponding support bars upwards or downwards.

2. The movable rail apparatus as set forth in claim 1, further comprising:
support blocks (111) provided at opposite sides under the main body (110), the support blocks (111) coming into contact with upper surfaces of the corresponding support bars (140) and supporting the main body (110) on the support bars (140).

3. The movable rail apparatus as set forth in claim 1, further comprising:
auxiliary rails (171) provided on opposite sides of the rail;
guide rollers (172) provided on opposite sides of the support body (160), the guide rollers (172) engaging with the corresponding auxiliary rails (171); and
auxiliary actuators (173) provided at opposite sides under the main body (110), the auxiliary actuators (173) moving the support body (160) upwards or downwards.

4. The movable rail apparatus as set forth in claim 1, wherein the drive unit comprises:
a drum (181) rotatably provided at a predetermined position under the main body (110);
a drive motor (182) rotating the drum (181); and
a wire rope (183) connected to front and rear ends of the rail (170), the wire rope (183) being wound around a circumference of the drum (181).

5. A method of transferring a ship using the movable rail apparatus as set forth in any one of claims 1 to 4, comprising:
operating the side actuators (150) and the lift actuator (161) so that the support bars (140) and the rail (170) are lifted, and operating the front axle (120) and the rear axle (130) so that the apparatus moves to a preset location;
operating the side actuators (150) at the preset location so that the support bars (140) are placed onto a ground;
lifting the wheels of the front and rear axles (120, 130);
operating the drive unit (180) so that the rail (170) is moved forwards;
operating the lift actuator (161) so that the rail (170) is placed onto the ground;
operating the side actuator (150) so that the support bars (140) are lifted from the ground;
operating the drive unit (180) so that the main body (110) and the support body (160) are moved forwards; and
operating the side actuators (150) so that the support bars (140) are moved downwards and placed onto the ground.

## Patentansprüche

1. Bewegliche Schienenvorrichtung zur Überführung eines Schiffes, umfassend:
einen Grundkörper (110), der das darauf platzierte Schiff trägt;
eine Vorderachse (120), die unter einem vorderen Abschnitt des Grundkörpers (110) vorgesehen ist, wobei die Vorderachse (120) mit Rädern versehen ist, welche lenkbar und höhenverstellbar sind;
eine Hinterachse (130), die unter einem hinteren Abschnitt des Grundkörpers (110) vorgesehen ist, wobei die Hinterachse (130) mit einem Rad versehen ist, welches höhenverstellbar ist;
einen Stützkörper (160) mit einem Hubstellglied (161), das an einer Oberseite des Stützkörpers (160) vorgesehen ist, wobei das Hubstellglied (161) mit einem vorbestimmten Abschnitt einer Unterseite des Grundkörpers (110) verbunden ist;
eine Schiene (170), die dafür ausgelegt ist, dass die Schiene (170) durch eine Aufwärts- oder Abwärtsbetätigung des Hubstellglieds (161) aufwärts oder abwärts bewegt wird,
**dadurch gekennzeichnet, dass** der Stützkörper (160) ein Rad aufweist, das unterhalb einer Unterseite von diesem vorgesehen ist, dass die Schiene (170) vorwärts oder rückwärts beweglich ist, während das Rad (162) des Stützkörpers (160) mit einer Oberseite der Schiene (170) in Kontakt gebracht wird; und
weiterhin **gekennzeichnet durch** eine Antriebseinheit (180), welche an einer vorbestimmten Stelle unter dem Grundkörper (110) vorgesehen ist, wobei die Antriebseinheit (180) die Schiene (170) vorwärts oder rückwärts bewegt, **durch** Stützstangen (140), und
**durch** Seitenstellglieder (150), die an gegenüberliegenden Seiten unterhalb des Grundkörpers (110) vorgesehen sind, wobei die Seitenstellglieder die entsprechenden Stützstangen aufwärts und abwärts bewegen.

2. Bewegliche Schienenvorrichtung nach Anspruch 1, weiterhin umfassend:
Stützblöcke (111), die an gegenüberliegenden Seiten unterhalb des Grundkörpers (110) vorgesehen sind, wobei die Stützblöcke (111) mit Oberseiten der entsprechenden Stützstangen (140) in Kontakt treten und den Grundkörper (110) auf den Stützstangen (140) abstützen.

3. Bewegliche Schienenvorrichtung nach Anspruch 1, weiterhin umfassend:
Hilfsschienen (171), die an gegenüberliegenden Seiten der Schiene vorgesehen sind;
Führungsrollen (172), die an gegenüberliegenden Seiten des Stützkörpers (160) vorgesehen sind, wobei die Führungsrollen (172) mit den entsprechenden Hilfsschienen (171) in Eingriff stehen; und
Hilfsstellglieder (173), die an gegenüberliegenden Seiten unterhalb des Grundkörpers (110) vorgesehen sind, wobei die Hilfsstellglieder (173) den Stützkörper (160) aufwärts oder abwärts bewegen.

4. Bewegliche Schienenvorrichtung nach Anspruch 1, wobei die Antriebseinheit umfasst:
eine Trommel (181), welche drehbar an einer vorbestimmten Stelle unter dem Grundkörper (110) vorgesehen ist;
einen Antriebsmotor (182), welcher die Trommel (181) in Drehung versetzt, und
ein Drahtseil (183), welches mit dem vorderen Ende und dem hinteren Ende der Schiene (170) verbunden ist, wobei das Drahtseil (183) um den Umfang der Trommel (181) herumgewickelt wird.

5. Verfahren zur Überführung eines Schiffes unter Verwendung einer beweglichen Schienenvorrichtung, umfassend:
dass die Seitenstellglieder (150) und ein Hubstellglied (161) derart betätigt werden, dass die Stützstangen (140) und die Schiene (170) angehoben werden, und dass eine Vorderachse (120) und eine Hinterachse (130) derart bewegt werden, dass sich die Vorrichtung an eine vorab festgelegte Stelle bewegt;
dass die Seitenstellglieder (150) an der vorab festgelegten Stelle derart betätigt werden, dass die Stützstangen (140) auf den Boden aufgesetzt werden;
dass die Räder der Vorder- und der Hinterachse (120, 130) vom Boden angehoben werden;
dass die Antriebseinheit (180) derart betätigt wird, dass die Schiene (170) vorwärts bewegt wird;
dass das Hubstellglied (161) derart betätigt wird, dass die Schiene (170) auf den Boden aufgesetzt wird;
dass das Seitenstellglied (150) derart betätigt wird, dass die Stützstangen (140) vom Boden angehoben werden;
dass die Antriebseinheit (180) derart betätigt wird, dass der Grundkörper (110) und der Stützkörper (160) vorwärts bewegt werden; und
dass die Seitenstellglieder (150) derart betätigt werden, dass die Stützstangen (140) abwärts bewegt und auf den Boden aufgesetzt werden.

## Revendications

1. Dispositif à rail mobile destiné à déplacer un bateau, comprenant :
un corps de base (110) qui porte le bateau placé dessus ;
un essieu antérieur (120) qui est prévu sous une partie avant du corps de base (110), l'essieu antérieur (120) étant pourvu de roues qui sont orientables et réglables en hauteur ;
un essieu postérieur (130) qui est prévu sous une partie arrière du corps de base (110), l'essieu postérieur (130) étant pourvu d'une roue qui est réglable en hauteur ;
un corps support (160) avec un actionneur de levage (161) qui est prévu sur une face supérieure du corps support (160), l'actionneur de levage (161) étant relié à une partie prédéterminée d'une face inférieure du corps de base (110) ;
un rail (170) qui est conçu de telle sorte que lorsque l'actionneur de levage (161) est actionné vers le haut ou vers le bas, le rail (170) est déplacé vers le haut ou vers le bas,
**caractérisé en ce que** le corps support (160) présente une roue qui est prévue sous une face inférieure de ce dernier, **en ce que** le rail (170) peut bouger vers l'avant ou vers l'arrière alors que la roue (162) du corps support (160) est mise en contact avec une face supérieure du rail (170) ; et
**caractérisé en outre par** une unité d'entraînement qui est prévue à un point prédéterminé sous le corps de base (110), l'unité d'entraînement (180) faisant bouger le rail (170) vers l'avant ou vers l'arrière,
par des barres de support (140), et
par des actionneurs latéraux (150) qui sont prévus sur des côtés opposés sous le corps de base (110), les actionneurs latéraux faisant monter et descendre les barres de support correspondantes.

2. Dispositif à rail mobile selon la revendication 1, comprenant en outre :
des blocs de support (111) qui sont prévus sur des côtés opposés sous le corps de base (110), les blocs de support (111) entrant en contact avec des faces supérieures des barres de support correspondantes (140) et soutenant le corps de base (110) sur les barres de support (140).

3. Dispositif à rail mobile selon la revendication 1, comprenant en outre :
des rails auxiliaires (171) qui sont prévus sur des côtés opposés du rail ;
des rouleaux de guidage (172) qui sont prévus sur des côtés opposés du corps support (160), les rouleaux de guidage (172) se trouvant en prise avec les rails auxiliaires correspondants (171) ; et
des actionneurs auxiliaires (173) qui sont prévus sur des côtés opposés sous le corps de base (110), les actionneurs auxiliaires (173) faisant monter et descendre le corps support (160).

4. Dispositif à rail mobile selon la revendication 1, dans lequel l'unité d'entraînement comprend :
un tambour (181) qui est prévu à un point prédéterminé sous le corps de base (110) de manière à pourvoir tourner ;
un moteur d'entraînement (182) qui met en rotation le tambour (181), et
un câble métallique (183) qui est relié à l'extrémité avant et à l'extrémité arrière du rail (170), le câble métallique (183) s'enroulant autour de la circonférence du tambour (181).

5. Procédé destiné à déplacer un bateau en utilisant un dispositif à rail mobile, lors duquel les actionneurs latéraux (150) et un actionneur de levage (161) sont actionnés de telle sorte que les barres de support (140) et le rail (170) sont soulevés et lors duquel un essieu antérieur (120) et un essieu postérieur (130) sont déplacés de telle sorte que le dispositif se déplace à un point préalablement déterminé ;
les actionneurs latéraux (150) sont actionnés au point préalablement déterminé de telle sorte que les barres de support (140) se posent sur le sol ; les roues de l'essieu antérieur et de l'essieu postérieur (120, 130) sont soulevées du sol ; l'unité d'entraînement (180) est actionnée de telle sorte que le rail (170) est déplacé vers l'avant ;
l'actionneur de levage (161) est actionné de telle sorte que le rail (170) se pose sur le sol ; l'actionneur latéral (150) est actionné de telle sorte que les barres de support (140) sont soulevées du sol ;
l'unité d'entraînement (180) est actionnée de telle sorte que le corps de base (110) et le corps support (160) sont déplacés vers l'avant ; les actionneurs latéraux (150) sont actionnés de telle sorte que les barres de support (140) sont déplacées vers le bas et se posent sur le sol.
